# EUROPÄISCHE PATENTANMELDUNG

(11) **EP 1 798 462 A1**
(43) Veröffentlichungstag der Anmeldung: **20.06.2007**
(21) Anmeldenummer: 06024258.3
(22) Anmeldetag: 23.11.2006
(51) Int. Cl.: F16L 55/179, F16L 55/26

(54) **Verfahren zum Sanieren von Abzweigleitungen von Kanalrohren**

(30) Priorität: 17.12.2005 DE 102005060543
(71) Anmelder: Brandenburger Patentverwertung GdbR., 76829 Landau (DE)
(72) Erfinder: Noll, Christian, 67117 Limburgerhof (DE)
(74) Vertreter: Kesselhut, Wolf

(57) **Zusammenfassung**

Die Erfindung betrifft ein Verfahren zum Sanieren von undichten Wänden (1) an Abzweigleitungen (2) von Kanalrohren mit einem an die Innenwand der Leitung anpressbaren, mit einem härtbaren Harz getränkten Faserschlauch, der an seiner Innenseite mit einer wasserlöslichen Folie (5) belegt ist, sowie ein Auskleidungsteil in Form eines oben offenen Zylinderhutes (4) zur Durchführung des Verfahrens.

## Beschreibung

Die Erfindung betrifft ein Verfahren zum Sanieren von undichten Wänden an Abzweigleitungen von Kanalrohren, insbesondere von Hausanschlussleitungen, mit einem an die Innenwand der Leitung anpressbaren Auskleidungsteil aus einem Faserschlauch, der mit einem härtbaren Kunstharz getränkt und an seiner Innenseite mit einer Folie versehen ist, sowie ein Auskleidungsteil zur Durchführung des Verfahrens nach Anspruch 1 und 9.

Ein besonders elegantes Verfahren zum Sanieren von erdverlegten Abwasserkanälen besteht darin, dass man einen flexiblen, mit einem Reaktionsharz getränkten Faserschlauch in den Kanal einführt, dort aufbläst und danach das Harz aushärtet. In der WO 00/73692 ist ein derartiger Auskleidungsschlauch beschrieben. Er besteht aus einem harzgetränkten Faserband, das außen und auch innen mit einem Folienschlauch versehen ist. Die Folienschläuche können aus Polyamid oder Polyethylen bestehen. Beides sind wasserunlösliche Polymere.

Bei Abwasserkanälen treten an den Wänden von Abzweigleitungen vom Hauptkanal, die zu Grundstücken führen, häufig undichte Stellen, wie Risse und Spalten auf. Durch diese tritt einerseits das im Kanal befindliche Abwasser in das Erdreich aus, was zu Geruchsbelästigung führt, andererseits kann aber auch Grundwasser in den Kanal eintreten, wodurch die vom Kanal abzuführende Wassermenge erhöht wird. In der DE-A 39 29 558 wird daher vorgeschlagen, in den Verbindungsbereich zwischen Hauptkanal und Abzweigleitung ein an die Innenseite der Abzweigleitung anpressbares Auskleidungsteil aus einem mit Kunstharz getränktem Faservlies einzuführen. Das Faservlies kann aus mehreren Schichten bestehen und mit einer innenliegenden Folie oder einer flüssigkeitsundurchlässigen Schicht versehen sein.

In der EP- A 740 102 ist ebenfalls ein Verfahren zum Sanieren von undichten Wänden von Abzweigleitungen beschrieben. Dort wird das Auskleidungsteil außen mit einem Epoxidharz versehen, das als Klebemittel eine gute Verbindung mit der Innenwand der Abzweigleitung bewirken soll.

In der Praxis wird ein Auskleidungsteil zum Sanieren von Abzweigleitungen derzeit folgendermaßen hergestellt:
- auf einem hutförmigen Metallwerkzeug wird eine Folie aus einem wasserunlöslichen Polymeren, z.B. aus Polyamid, Polyethylen oder Verbundfolien aufgebracht,
- darauf wird ein durch Eindickung vorverfestigbares, harzgetränktes Fasergebilde aufgetragen und dadurch das Auskleidungsteil in Form eines oben offenen Zylinderhutes ("Hutprofil") mit der Innenfolie gebildet,
- die Innenfolie wird aus dem Hutprofil herausgezogen,
- in das Hutprofil wird von unten ein aufblasbarer Gummiträger in Form eines umgekehrten T eingebracht,
- das Hutprofil kann dann in die Abzweigleitung eingeführt und ausgehärtet werden.

Die Innenfolie ist deshalb notwendig, weil sonst der mit dem härtbaren Harz getränkte Faserschlauch an dem Metallwerkzeug haften und sich schlecht davon abziehen lassen würde. Die wasserunlösliche Innenfolie muss vor der weiteren Bearbeitung wieder abgezogen werden, da sie sich sonst im späteren Betrieb durch die Wasserströmung ablösen würde, was zu Verstopfungen im Kanalrohr führen kann.

Beim Herausziehen der Innenfolie besteht nun die Gefahr, dass Teile, z.B. Fasern, aus dem harzgetränkten Fasergebilde herausgerissen werden, insbesondere dann, wenn das Harz zuvor stark eingedickt wurde. An den geschwächten Stellen am Auskleidungsteil können beim späteren Betrieb Beschädigungen und Undichtigkeiten auftreten. Ferner kann an den Randbereichen des Hutprofils etwas Klebemittel auslaufen und mit dem Gummiträger verkleben, wenn man die Innenfolie herausgezogen hat.

Demgemäß liegt der Erfindung die Aufgabe zugrunde, ein Verfahren zum Sanieren von Abzweigleitungen von Kanalrohren sowie ein Auskleidungsteil zu schaffen, bei denen diese Nachteile nicht auftreten.

Diese Aufgabe wird erfindungsgemäß dadurch gelöst, dass als Innenfolie eine wasserlösliche Innenfolie verwendet wird.

Gegenstand der Erfindung ist demzufolge ein Verfahren zum Sanieren von undichten Wänden an Abzweigleitungen von Kanalrohren nach Anspruch 1 sowie ein Auskleidungsteil zur Durchführung des Verfahrens nach Anspruch 9.

Bei einer bevorzugten Ausführungsform der Erfindung wird das Auskleidungsteil in Form eines Hutprofils hergestellt, indem man auf ein hutförmiges Metallwerkzeug eine wasserlösliche Folie auflegt und darauf ein vorverfestigbares, harzgetränktes Fasergebilde aufträgt. Dies kann entweder dadurch geschehen, dass man harzgetränkte Faserstreifen aus einem Glasfaservlies oder einem Polyesternadelfilz auflegt und die Streifen durch Andrücken miteinander verbindet, oder indem faserhaltiges Harz aufgespritzt wird. Das härtbare Harz ist vorzugsweise ein mit energiereichen Strahlen, insbesondere durch UV- Licht härtbares Polyester- oder Vinylesterharz, das zum Vorverfestigen ein Eindickmittel, z.B. auf Magnesiumoxidbasis, enthält.

Im Anschluss daran wird in das Hutprofil bevorzugt von unten her ein expandierbarer, insbesondere aufblasbarer Gummiträger, z.B. eine Gummiblase aus transparentem Silikongummi, eingeführt, der die Form eines umgekehrten " T " besitzt und bevorzugt oben aus dem Hutprofil herausragt.

Anschließend wird das Hutprofil einschließlich der Krempe außen ganz oder teilweise mit einem Klebemittel belegt. Dieses kann z.B. ein Epoxidharz sein oder ein Polyurethanharz, vorzugsweise ein Zweikomponentenharz aus einem Polyetherpolyol oder einem Polyether/Polyester- Polyol und einem Düsocyanathärter. Das Klebemittel wird entweder durch Aufstreichen oder durch Spachteln auf das Hutprofil aufgetragen. Die Schichtdicke kann dabei zwischen 1 und 3 mm liegen. Innerhalb von einer halben bis einer Stunde sollte das Hutprofil in den Kanal eingeführt sein, da sonst eine vorzeitige Härtung einsetzt.

Nach einem weiteren der Erfindung zugrunde liegenden Gedanken kann das Auskleidungsteil werkseits vorgefertigt werden.

Bei einer anderen Ausführungsform der Erfindung wird das Auskleidungsteil bauseits, dh. auf der Baustelle, gefertigt. Dabei wird zunächst an ein schlauchförmiges Fasergebilde, z.B. aus einem Nadelfilz, am unteren Rand eine Krempe angebracht, z.B. durch Annähen. In dieses Hutprofil wird die wasserlösliche Innenfolie eingebracht und das Hutprofil wird mit einem härtbaren Harz getränkt. In diesem Fall handelt es sich um ein Epoxidharz, das nicht vorverfestigt werden braucht. Hier kann auf das Aufbringen eines gesonderten Klebemittels verzichtet werden, da das Epoxidharz gleichzeitig als solches wirkt. Schließlich wird der aufblasbare Gummiträger von unten her in das Hutprofil eingebracht.

Bei beiden Ausführungsformen wird das Hutprofil nach bekannten Methoden in den Kanal eingeführt und mittels eines Kanalroboters ferngesteuert an die Innenwand der Abzweigleitung angelegt. Dazu kann z.B. ein fahrbarer Teller dienen, wie er in der EP-A 740 102 beschrieben ist, oder ein Schildwagen mit einem nach oben gewölbten Aufsatz, auf dem das Hutprofil aufsitzt. Dieses ist, solange das harzgetränkte Fasergebilde zwar vorverfestigt aber noch nicht ausgehärtet ist, dehnbar und elastisch, so dass es beim Einbringen in den Kanal umgelegt werden kann. Sobald es seine endgültige Position eingenommen hat, wird der Gummiträger aufgeblasen, vorzugsweise durch Beaufschlagen mit Luftdruck von 0,5 bis 0,8 bar. Dadurch schmiegt sich das Hutprofil dicht an die Innenwand der Abzweigleitung an. Nun wird im Fall der ersten Ausführungsform eine Strahlungsquelle, vorzugsweise ein Schlitten, auf dem mehrere UV- Lampen montiert sind, durch den Kanal gezogen. Sobald der Schlitten die Eingangsstelle zur Abzweigleitung erreicht hat, werden die Lampen angeschaltet und die Härtung des Polyester- bzw. Vinylesterharzes setzt ein, die nach wenigen Minuten beendet ist. Gleichzeitig beginnt die Reaktion des Polyols mit dem Härter, die bei Raumtemperatur nach etwa 10 bis 20 Stunden weitgehend beendet ist.

Bei der anderen Ausführungsform erfolgt im Falle eines kalthärtenden Epoxidharzes die Kalthärtung im Verlauf einiger Stunden oder die Heißhärtung wird z.B. durch IR- Bestrahlung durchgeführt. Das Klebemittel bewirkt eine bessere Verbindung zwischen dem Auskleidungsteil und der Innenwand der Abzweigleitung. Nach beendeter Härtung wird der Gummiträger druckentlastet und kann herausgezogen werden.

Erfindungsgemäß besteht die Innenfolie aus einem wasserlöslichen Polymeren, vorzugsweise aus einem Polyvinylalkohol, der gegebenenfalls, z.B. mit Essigsäure zu bis zu 20% teilverseift sein kann. Die Folie kann zwischen 50 und 200 µm, insbesondere zwischen 100 und 150 µm dick sein. Grundsätzlich können auch andere wasserlösliche Polymere, z.B. auf Basis von Celluloseethern, Gelatine, Polyacrylaten, Polyvinylpyrrolidon oder Polyvinylethern verwendet werden, sofern sie zu Folien verarbeitbar sind.

Es ist ein Vorteil des erfindungsgemäßen Verfahrens, dass der Innenfolienschlauch nicht herausgezogen werden muss. Das wasserlösliche Polymere löst sich auf, sobald Wasser durch den Kanal und die Abzweigleitung fließt.

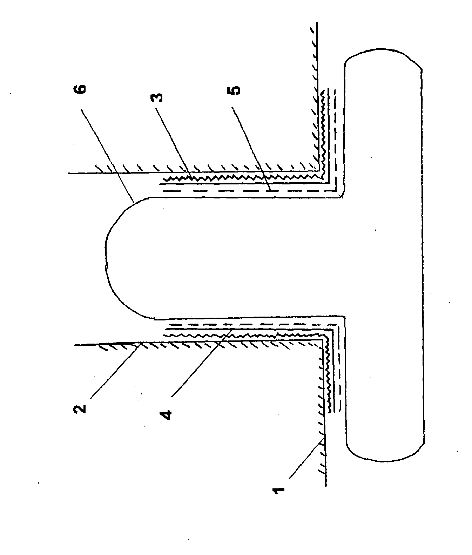

Die beigefügte Zeichnung zeigt schematisch im Schnitt den Schichtaufbau des erfindungsgemäßen Auskleidungsteils nach dem Einführen in die Abzweigleitung und Aufblasen des Gummiträgers. Dabei ist mit 1 die Kanalwand bezeichnet, mit 2 die Abzweigleitung, mit 3 das Klebemittel, mit 4 das Hutprofil, mit 5 die Innenfolie und mit 6 der Gummiträger.

Bei beiden Ausführungsformen kann die Sanierung der Abzweigleitung direkt im Anschluss an die Sanierung des Hauptkanalrohrs durchgeführt werden. Dazu wird das Kanalrohr auf bekannte Art und Weise mit einem harzgetränkten Faserschlauch ausgekleidet und das Harz ausgehärtet. Dann wird an der Eingangsstelle zur Abzweigleitung das ausgehärtete Auskleidungsteil mittels eines Roboters aufgeschnitten und die Abzweigleitung nach der vorliegenden Erfindung saniert.

## Patentansprüche

1. Verfahren zum Sanieren von undichten Wänden an Abzweigleitungen von Kanalrohren mit einem an die Innenwand der Abzweigleitung anpressbaren Auskleidungsteil in Form eines oben offenen Zylinderhutes ("Hutprofil") aus einem Fasergebilde, das mit einem härtbaren Harz getränkt ist, wobei
- das Hutprofil mit einer Innenfolie versehen ist,
- in das Hutprofil ein expandierbarer Gummiträger in Form eines umgekehrten T eingebracht wird,
- das Hutprofil durch das Kanalrohr in die Abzweigleitung eingeführt wird,
- der Gummiträger expandiert wird, so dass sich das Hutprofil dicht an die Innenwand der Abzweigleitung anschmiegt,
- das Harz ausgehärtet, und
- der Gummiträger druckentlastet und herausgezogen wird,
**dadurch gekennzeichnet, dass** die Innenfolie aus einem wasserlöslichen Polymeren besteht.

2. Verfahren nach Anspruch 1, **dadurch gekennzeichnet, dass** man
- auf ein hutförmiges Werkzeug eine wasserlösliche Folie auflegt,
- darauf ein harzgetränktes Fasergebilde aufträgt und **dadurch** das Hutprofil mit Innenfolie ausbildet,
- das Harz durch Eindicken vorverfestigt,
- in das Hutprofil von unten einen aufblasbaren Gummiträger in Form eines umgekehrten T einbringt,
- auf das Hutprofil außen ein Klebemittel aufbringt,
- das Hutprofil durch das Kanalrohr in die Abzweigleitung einführt,
- den Gummiträger aufbläst, so dass sich das Hutprofil dicht an die Innenwand der Abzweigleitung anschmiegt,
- das Harz und das Klebemittel aushärtet und
- den Gummiträger druckentlastet und herauszieht.

3. Verfahren nach Anspruch 2, **dadurch gekennzeichnet, dass** das härtbare Harz ein durch Eindickung vorverfestigbares, lichthärtbares Polyester- oder Vinylesterharz ist,

4. Verfahren nach Anspruch 2, **dadurch gekennzeichnet, dass** das Klebemittel ein Polyurethan- oder Epoxidharz ist.

5. Verfahren nach Anspruch 1, **dadurch gekennzeichnet, dass** man
- an ein schlauchförmiges Fasergebilde am unteren Rand ringsum eine Krempe anbringt und damit ein Hutprofil bildet,
- in das Hutprofil eine wasserlösliche Innenfolie einbringt,
- das Hutprofil mit einem härtbaren Harz tränkt,
- in das Hutprofil von unten einen aufblasbaren Gummiträger in Form eines umgekehrten T einbringt,
- das Hutprofil durch das Kanalrohr in die Abzweigleitung einführt,
- den Gummiträger aufbläst, so dass sich das Hutprofil dicht an die Innenwand der Abzweigleitung anschmiegt,
- das Harz aushärtet und
- den Gummiträger druckentlastet und herauszieht.

6. Verfahren nach Anspruch 5, **dadurch gekennzeichnet, dass** das härtbare Harz ein Epoxidharz ist.

7. Verfahren nach Anspruch 1, **dadurch gekennzeichnet, dass** die Innenfolie aus einem Polyvinylalkohol oder einem teilverseiften Polyvinylalkohol besteht.

8. Verfahren zum Sanieren von Kanalrohren und davon abgehenden Abzweigleitungen, **dadurch gekennzeichnet, dass** man erst das Hauptkanalrohr mit einem harzgetränkten Faserschlauch auskleidet und das Harz aushärtet, dann an der Eingangsstelle zur Abzweigleitung den ausgehärteten Faserschlauch aufschneidet und schließlich die Abzweigleitung nach Anspruch 1 saniert.

9. Auskleidungsteil in Form eines oben offenen Zylinderhutes ("Hutprofil") aus einem Fasergebilde, das mit einem härtbaren Harz getränkt und mit einer Innenfolie versehen ist, wobei in das Fasergebilde ein expandierbarer Gummiträger in Form eines umgekehrten T einbringbar ist, um dieses in eine Abzweigleitung eines Kanalrohres einzuführen und nach dem Einführen dicht an die Innenwand der Abzweigleitung anzulegen, zur Durchführung des Verfahrens nach einem der vorhergehenden Ansprüche **dadurch gekennzeichnet,**
**dass** die Innenfolie aus einem wasserlöslichen Polymeren besteht.
